# EUROPEAN PATENT SPECIFICATION

(11) **EP 1 058 912 B1**
(45) Date of publication and mention of the grant of the patent: **03.09.2003**
(21) Application number: 99907170.7
(22) Date of filing: 23.02.1999
(51) Int. Cl.: G06T 5/20

(54) **SUBSAMPLED TEXTURE EDGE ANTIALIASING**
ANTIALIASING MIT UNTERABTASTUNG FÜR TEXTUR-RAENDER
ANTICRENELAGE DES CONTOURS DE TEXTURES SOUS-ECHANTILLONNEES

(30) Priority: 05.03.1998 US 35376
(43) Date of publication of application: 13.12.2000
(73) Proprietor: MICROSOFT CORPORATION, Redmond, WA 98052 (US)
(72) Inventor: VAN HOOK, Timothy, Atherton, CA 94027 (US); DELAURIER, Anthony, Sunnyvale, CA 94086 (US)
(74) Representative: Ebner von Eschenbach, Jennifer
(86) International application number: US9903816
(87) International publication number: WO99045502

(56) References cited:
- EP-A- 0 676 723
- US-A- 5 333 245
- US-A- 5 734 386

## Description

### FIELD OF THE INVENTION

The present claimed invention relates to the field of antialiasing in computer graphics systems. More particularly, the present claimed invention relates to antialiasing of texture edges by subsampling.

### BACKGROUND ART

In modern three-dimensional (3D) computer graphics, images or objects are typically modeled by graphics primitives such as points, line segments, polygons, etc. Among the primitives, the polygons and especially triangles have been most commonly used in modeling the 3D images and objects. This is because polygons such as triangles are generally easier to generate and simpler to support in hardware than other primitives.

The popular polygon modeling method, however, presents a problem in modeling images or objects having intricate and fine details. In particular, modeling the intricate and fine details requires smaller polygons. For example, a large flat wall, which is really a single rectangle, might require thousands of individual bricks to model the intricate and fine details of the surface. The requirement of smaller polygons, in turn, entails more polygons in modeling the images or objects. In computer graphics, processing cost is proportional to the number of polygons used in modeling an image. This is because more polygons require more data processing, more data transformation, and more data storage. Hence, modeling of fine and intricate images or objects using polygons has been an expensive and impractical process for all but the most expensive graphics systems.

Various alternatives to the polygon modeling method have been devised in modeling images and objects having fine and intricate details. One of the most popular approaches is the texture mapping or pattern mapping method where an image is glued onto a polygon so that the entire polygon with the glued image is drawn as a single polygon. The image is called a texture or texture map and its individual elements are called texels. European Patent 626 723 to Mitsubishi Denki Kabushiki Kaisa teaches a method for antialiasing using texture mapping. The texture map typically consists of rectangular arrays of texels, which are associated with data such as color, luminance, color and alpha, etc. Alternatively, the texture map may be defined by a procedure. For each pixel, a set of selected texels are used either to substitute for or to scale one or more of the surface's material properties such as its alpha value representing transparency or opacity.

Generally, the rectangular texture is mapped onto the surface of objects in texture mapping. The rectangular grid of color values in a texture map is usually referenced with (s, t) coordinate values. On the other hand, surface positions in the scene are referenced with (u, v) object space coordinate values and pixel positions on the screen space are referenced in (x, y) coordinates.

Texture mapping can be accomplished in either the texture scanning method or the more popular inverse scanning method. In the texture scanning method, the texture map is mapped from (s, t) coordinates to object surfaces in (u, v) coordinates. The object surfaces in (u, v) coordinates are then mapped to the image space in (x, y) coordinates. In the inverse scanning method also known as pixel-order scanning or image-order scanning method, the texture mapping process takes place in the reverse order. Specifically, the four corners of a pixel in (x, y) coordinates are mapped onto the surface in (u, v) coordinates. Then, the pixel's corner points in the surface's coordinate space (u, v) are mapped into the texture's coordinate space (s, t). The four (s, t) points in the texture map define a quadrilateral that approximates a shape into which the pixel may actually map due to surface curvature. A value for the pixel is generated by summing all texels that lie within the quadrilateral and weighting each texel by the fraction of the texel that lies within the quadrilateral.

For images having complex and detailed edges such as a tree or vegetation, the texture mapping method has been applied in a technique called "billboarding" method. In this approach, the individual texel consists of not only the R, G, and B color values, but also an alpha value. Different alpha values are assigned to individual fragments in an image to create the effect of a nonrectangular raster image. Typically, an alpha of 0 is assigned to each translucent fragment and an alpha of 1.0 is assigned to each opaque fragment. For example, a polygon can be drawn in the shape of a tree and a texture map of a foliage may be applied to the polygon. The viewer can see through parts of the rectangular texture that aren't part of the tree with alpha values of 0, see for instance Foley, van Dam et al.: "Computer Graphics, Principles and Practice", Addison Wesley 1990, the clapters 16.3.2, 16.3.4, and 17.6.1.

The resulting image is comprised of opaque fragments with an alpha value of 1. On the other hand, fragments with alpha values of 0 are not drawn. In this manner, alpha acts as a mask or pattern texture of an object. That is, the opacity of each pixel based on the opacity of the texel determines whether the pixel is written or not. When the texture of the tree is mapped onto a surface, the pixels where the texture alpha is opaque are drawn. More typically, the alpha value is compared to a reference alpha value between 0 and 1 (e.g., 0.5). In this alpha threshold test, if the alpha value is larger than the reference alpha value, then the pixel is drawn. Otherwise, the pixel is not drawn. Hence, the billboarding method allows simple polygons with a texture map containing R, G, B, and A (i.e., alpha) values to generate complex images.

In 3D graphics, lines or the edges of polygons, especially nearly horizontal or nearly vertical ones, often appear jagged or stairstepped. These jaggies or stairsteps typically result from the approximation of an ideal line through a series of pixels that must lie on the pixel grid. The jaggedness or stairstepping is called aliasing.

Antialiasing is a method that smoothes out the jaggies or stairsteps. With raster systems capable of displaying color or gray scale, the antialiasing method typically modifies intensities of pixels to smooth out the transition between pixels. By varying the intensities of pixels along the boundaries of the edges exhibiting aliasing effects, the jaggies or stairsteps can be reduced to present a more realistic image.

Like the lines and the edges of polygons, the images generated using the billboarding method can suffer from aliasing problems. In the conventional billboarding method, the edges are defined by textures using alpha values to represent two states (i.e., opacity and translucence) as described above. Hence, the texture edges drawn can exhibit aliasing effects.

To improve the quality of textured images, traditional methods typically generate more texture samples per pixel. In one approach, for example, new sample texels are generated between existing texels by interpolating the texel values of the neighboring texels. These samples are then stored in memory for subsequent processing. Another approach generates higher resolution texture by storing more texels per pixel.

Unfortunately, these conventional methods require costly computing resources to implement. In particular, both approaches require a large memory such as a framebuffer or random-access-memory (RAM) to store the attributes of texels in addition to pixel values. Furthermore, since a set of texels is generated for each pixel, texels outnumber the pixels by the number of texels per pixel. Hence, the storage requirement of the texels data can be prohibitively expensive to incorporate in all but the most expensive computer systems. In addition, texturing is typically a costly graphics operation. For example, for every sample of a texture, a set of source texels are accessed and filtered. Then, the resulting texels undergo linear or higher order arithmetic operations. Thus, the texturing is a process requiring high bandwidth and computing resources.

Thus, what is needed is a method for antialiasing texture edges without the cost usually associated with the traditional high resolution texture or supersampling methods. The present invention satisfies these needs by providing a method for generating texture subsamples from neighboring block of pixels.

### SUMMARY OF THE INVENTION

The present invention provides a method for antialiasing texture edges by generating texture alpha coverage values for edge pixels from subsamples of the pixels in a computer graphics system as claimed in claim 1, herein. The antialiasing method of the present invention maps a texture onto a graphics primitive, preferably a polygon, to generate a plurality of pixels within the graphics primitive. Each of the pixels generated is characterized by a texture alpha value representing opacity. Among the generated pixels, a block of NxN pixels are selected where N is an integer greater than 1. For each pixel within the block of NxN pixels, a set of subsample points are generated. Then, the present invention computes an alpha value for each subsample point in each pixel by either interpolation or extrapolation. The computed alpha values for the sample points in each pixel are then used to compute a coverage alpha value for each pixel for generating an antialiased pixel in each of the pixels within the block of NxN pixels.

### BRIEF DESCRIPTION OF THE DRAWINGS

The accompanying drawings, which are incorporated in and form a part of this specification, illustrate embodiments of the invention and, together with the description, serve to explain the principles of the invention:
Figure 1 illustrates a system level block diagram of an exemplary computer system that implements the steps of the present invention.
Figure 2 shows a block diagram of a 3D graphics image rendering pipeline or process.
Figure 3 illustrates a flow chart of the steps for antialiasing the edges by subsampled texture mapping in accordance with the present invention.
Figure 4 illustrates an exemplary subsample point patterns for generating coverage alpha values for a block of 2x2 pixels.
Figure 5 illustrates a surface defined by the orthogonally projecting alpha values of the pixels in the quad.
Figure 6 shows a block of 2x2 pixels for illustrating exemplary bi-linear interpolation and extrapolation techniques in accordance with the present invention.

### DESCRIPTION OF THE PREFERRED EMBODIMENTS

In the following detailed description of the present invention, subsampled texture edge antialiasing, numerous specific details are set forth in order to provide a thorough understanding of the present invention. However, it will be obvious to one skilled in the art that the present invention may be practiced without these specific details. In other instances, well known methods, procedures, components, and circuits have not been described in detail so as not to unnecessarily obscure aspects of the present invention.

The present invention generates antialiased texture edges by subsampling texture alpha values of a block of NxN pixels where N is an integer greater than 1. By rendering a group of NxN pixels in parallel, the present invention provides antialiasing without either the cost of a high resolution texture or the cost of multiple texture samples per pixel. The method of the present invention is implemented in a computer graphics system.

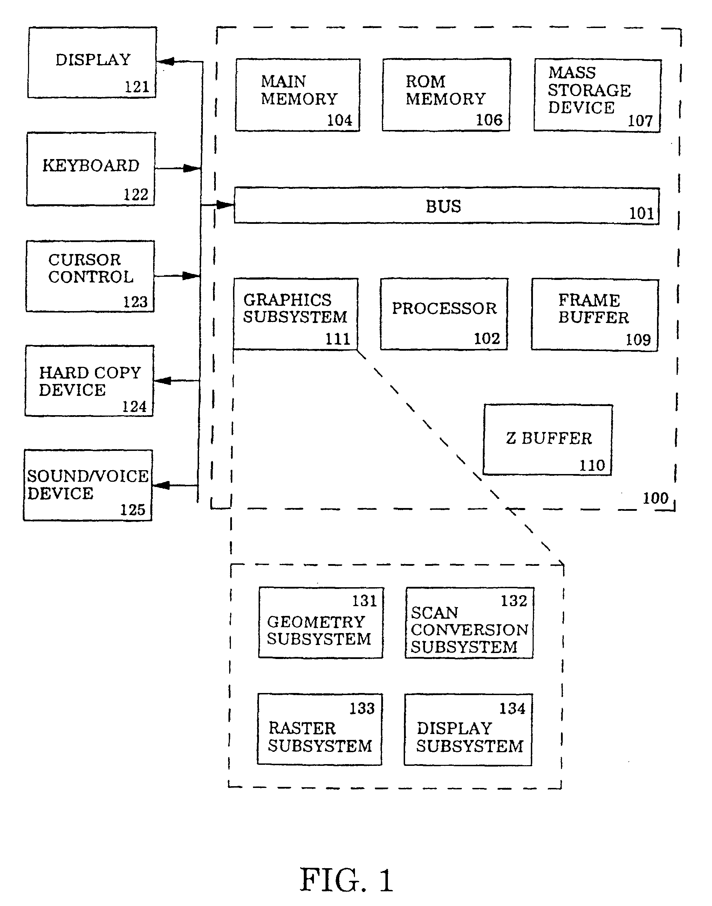

Figure 1 illustrates a block diagram or a computer graphics system 100 upon which the present invention can be implemented or practiced. It should be appreciated that the computer graphics system 100 is exemplary only and that the present invention can operate within a number of different computer system configurations including general purpose computer systems, embedded computer systems, and computer systems specially adapted to electronic design automation. In the following discussions of the present invention, certain processes and steps that are realized as a series of instructions (e.g., software program) that reside within computer readable memory units of computer graphics system 100 and executed by processors therein.

The computer graphics system 100 includes any computer controlled graphics systems for generating complex or 3D images. The computer graphics system 100 includes a bus 101 for transmitting digital information between the various parts of the computer system. One or more processors 102 are coupled to bus 101 for processing information. The information along with the instructions of how the information is to be processed are stored in a hierarchical memory system comprised of mass storage device 107, read only memory 106, main memory 104, and static random access memory (SRAM) 103. Mass storage device 107 is used to store vast amount of digital data. The mass storage device 107 can consist one or more hard disk drives, floppy disk drives, optical disk drives, tape drives, CD ROM drives, or any number of other types of storage devices having media for storing data digitally. A read only memory (ROM) 106 is used to store digital data of a permanent basis, such as instructions for the microprocessors. Main memory 104 is used for storing digital data on an intermediate basis. Main memory 104 can be dynamic random access memory (DRAM).

A graphics subsystem 111 is an option which can be included in the computer graphics system 100. Processor 102 provides the graphics subsystem 111 with graphics data, such as drawing Commands, coordinate vertex data, and other data related to an object's geometric position, color, texture, shading, and other surface parameters. The object data is processed by graphics subsystem 111 in the following four pipelined stages: geometry subsystem 131, scan conversion subsystem 132, raster subsystem 133, and a display subsystem 134. The geometry subsystem 131 converts the graphical data from processor 102 into a screen coordinate system. It is the function of the geometry subsystem 131 to perform the projection and transformation process to give depth to a displayed object. The resulting primitives (points, lines, polygons, polyhedra, and the like) supplied by the geometry subsystem 131 are then supplied to the scan conversion subsystem 132. It is the function of the scan conversion subsystem 132 to then generate pixel data based on these primitives. The scan conversion subsystem 132 performs the interpolation functions to interpolate straight lines so that each intermediate value need not be individually and separately calculated by the geometry subsystem. Next, the pixel data is sent to the raster subsystem 133, whereupon Z-buffering, blending, texturing, and antialiasing functions are performed. The resulting pixel values are subsequently stored in frame buffer 109, and the Z values are stored in the Z buffer 110. The display subsystem 134 reads the frame buffer 109 and displays the image on monitor 121.

Several other devices may also be coupled to the computer graphics system 100. For example, an alphanumeric keyboard 122 is used for inputting commands and other information to processor 102. Another type of user input device is cursor control device 123 (a mouse, trackball, joystick, and the like) used for positioning a movable cursor and selecting objects on a computer screen. Another device which may be coupled to bus 101 is a hard copy device 124 (e.g., a laser printer) for printing data or other information onto a tangible medium. Additionally, a sound recording or video option 125 can be coupled to the computer graphics system 100 to provide multimedia capabilities.

The present invention is implemented in the computer graphics system 100 to render antialiased texture edges within a polygon for display. Rendering realistic images in a 3D graphics computer system necessitates modeling of surfaces. A common surface modeling method is the polygon mesh technique. A polygon mesh is a collection of edges, vertices, and polygons connected such that each edge is shared by at most two polygons. An edge connects two vertices, and a polygon is a closed sequence of edges. An edge can be shared by two adjacent polygons, and a vertex is shared by at least two edges. Each vertex has an X, Y, and Z coordinate in 3D space. The mathematical descriptions of the polygons are referred to as primitives. The collection of polygons in its entirety, along with connectivity and attribute information, model an object. It should be appreciated that the polygon mesh technique for approximating a surface is well known in the art.

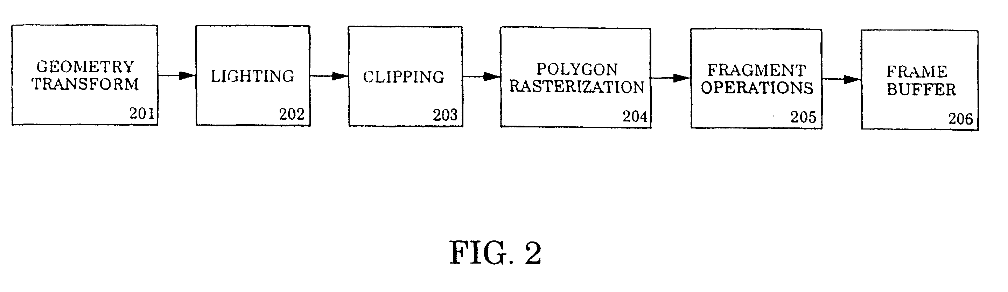

The polygon modeling is one of several steps in rendering an image in a computer graphics system. Figure 2 shows a block diagram of a 3D graphics image rendering pipeline or process 200 in computer graphics system 100. The rendering process 200 renders 3D objects or images onto a frame buffer for display. The rendering process 200 is implemented in the computer graphics system 100 described above. The geometry transform stage 201 models objects using various graphics primitives. Then, the lighting stage 202 applies lighting conditions to the primitives. The clipping stage 203 determines the portion of a primitive lying within a region. Polygon fragments are generated in the polygon rasterization stage 204 and passed to the fragment operations stage 205. A fragment is a part of a pixel covered by a graphics primitive such as a polygon. A pixel has a finite area and is considered to have a square shape. Each fragment belonging to a pixel contributes its color to the overall color of the pixel. This contribution depends upon the area of a fragment. The color of a pixel is a weighted average of color of all fragments within the pixel. The fragment area is used as weights. The antialiasing process of the present invention is applied in the fragment operations stage 205 of the rendering process 200. After applying the antialiasing process, the fragments are rendered into the frame buffer in the frame buffer stage 206 for subsequent display.

The rasterization stage 204 computes a number of attributes that describes the fragment such as color (e.g., RGB), depth (e.g., Z value), area, stencil, and transparency or alpha value. Typically, the rasterization stage 204 computes the attributes at the center of the pixels except for the area. The alpha value represents transparency or its inverse, opacity. The alpha value is typically between 0 and 1.0, with 0 being completely transparent and 1.0 being completely opaque.

The present invention utilizes alpha values to generate a coverage alpha value for antialiasing a pixel. In accordance with the present invention, a number of alpha sample points are generated within a pixel. These sample points are generated by specifically locating a number of subsample or supersample points within the pixel, typically between 4 and 16. These subsample points are preferably distributed in such a way that they cover equal areas of the pixel. It should be noted that the terms "supersample" and "subsample" both refer to a plurality of samples for each pixel and are used interchangeably herein.

Based on these multiple subsamples per pixel with an alpha at each subsample, the coverage alpha value of a pixel can be computed by first determining the number of subsamples whose alpha values are above a predetermined alpha threshold value. The coverage alpha mask value for the pixel can then be computed by dividing the number of subsamples exceeding the alpha threshold value by the total number of subsamples in the pixel. Then, this coverage alpha value can be used to in blending the color values to antialiase the textured image in accordance with many well known blending methods.

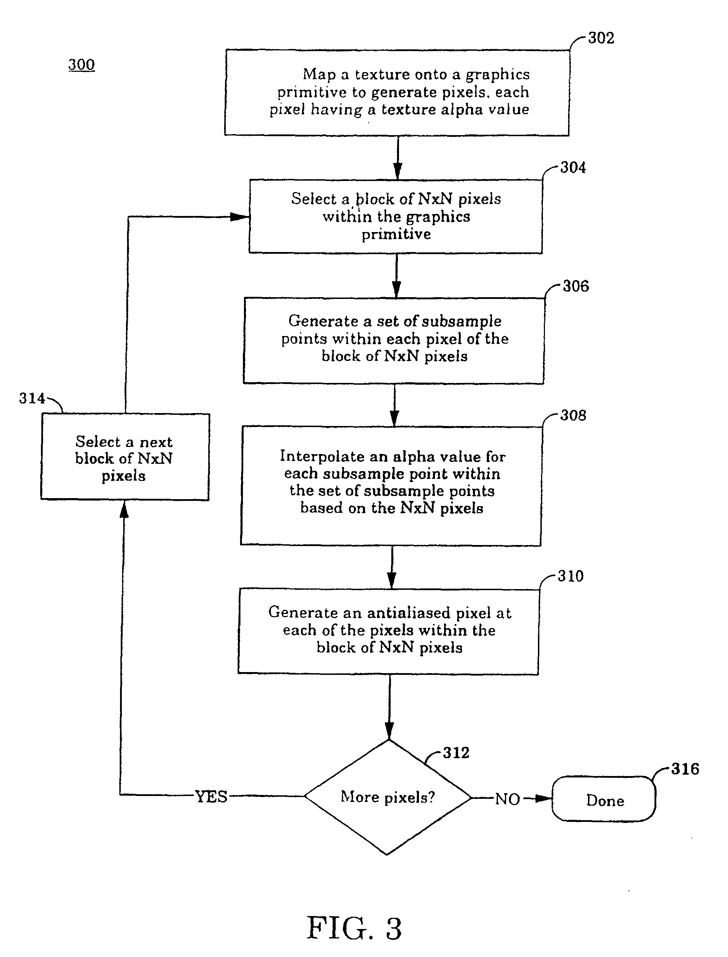

Figure 3 illustrates a flow chart 300 of the steps for antialiasing texture edges utilizing subsample texture alpha values in accordance with the present invention. A texture map or a procedure for generating a texture map is initially stored in a memory unit in the computer graphics system 100. Each texel in the texture map includes an alpha value representing opacity as well as the color value. In step 302, the present invention maps the texture or a part of the texture onto a graphics primitive, preferably a polygon, to generate a plurality of pixels within the graphics primitive. Each of the pixels generated is characterized by a texture alpha value. Mapping a texture onto a graphics primitive such as a polygon is a well known technique. In essence, the texture mapping involves rasterization of graphics primitives and filtering of the texture to generate texture samples at the pixels such as R (red), G (green), B (blue), and A (alpha) values along with the coordinates.

Among the generated pixels, a block of NxN pixels are selected in step 304 where N is an integer greater than 1. Preferably, the NxN pixels are contiguous rectangular grid of pixels. In one embodiment of the present invention, the subsequent computations for each pixel within the NxN grid of pixels take place simultaneously and in parallel. That is, the 2N pixels in the block of NxN pixels are logically drawn at the same time. In step 306, a set of subsample points are generated for each pixel within the block of NxN pixels.

In step 308, the present invention computes an alpha value for each subsample point in each pixel by either interpolation or extrapolation. In one embodiment, a subsample alpha value positioned in the inner portions of the NxN grid is obtained by interpolating between the NxN pixels using the coordinates of the supersample and the pixels. In another embodiment, a subsample alpha value residing in the outer portions of the NxN grid can be obtained by extrapolation.

The alpha values thus computed for the sample points in each pixel are then used to generate an antialiased pixel in each of the pixels within the block of NxN pixels. Specifically, the supersample alpha value is then thresholded by a specified alpha threshold value to determine whether the supersample is opaque or not. This yields a conventional coverage mask per pixel value. The coverage mask per pixel value is then blended by the number of subpixel coverage bits which are set. If there are more pixels within the primitive that need to be processed, the process 300 continues by selecting another block of NxN pixels to antialiase as depicted in steps 312 and 314. If not, the process 300 terminates at step 316.

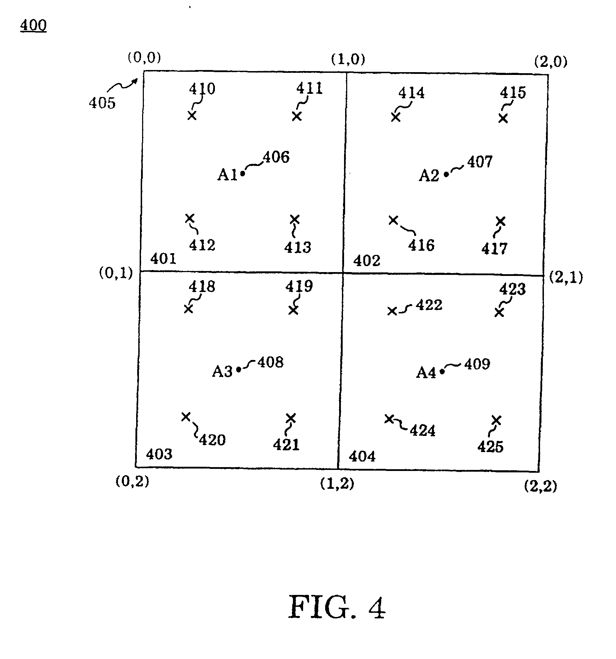

Figure 4 illustrates an exemplary subsample point patterns for generating coverage alpha values for a block of 2x2 pixels 400. The block of 2x2 pixels 400 is comprised of four contiguous pixels 401, 402, 403, and 404 and forms a quad. An (x, y) coordinate can be assigned to the quad. In one embodiment of the present invention, each of the pixels 401 through 404 in the quad is described by an (x, y) coordinate with an origin (0, 0) 405 at the upper left hand corner of the quad. The length and width of each pixel are 1 in either x or y direction. At the center, the pixels 401, 402, 403, and 409 are characterized by alpha values A1 406, A2 407, A3 408, and A4 409, respectively.

With reference to Figure 4, a pattern of four subsample points is associated with each pixel in the quad: the pattern in pixel 401 includes subsample points 410, 411, 412, and 413; the pattern in pixel 402 comprises subsample points 414, 415, 416, and 417; the pattern in pixel 403 consists of subsample points 418, 419, 420, and 421; and the pattern in pixel 409 includes subsample points 422, 423, 424, and 425. It should be noted that the present invention is illustrated by the subsample pattern in Figure 3, the present invention is neither dependent upon a particular sample point distribution nor a specific number of sample points per pixel, but works equally well with other patterns and numbers of subsample points. The subsample points, in particular, can be any number greater than 1. For most purposes, the number of subsample points in a pixel can range between 4 and 16.

These sample points provide a pattern or a mask for generating a coverage alpha value. Various apparatus and methods for generating point sample masks are well known in the art and are described, for example, in U.S. Patent No. 5,369,739, Apparatus and Method for Generating Point Sample Masks in a Graphics Display System, Akeley.

In a quad of four pixels as one shown in Figure 4, a texture alpha (i.e., opacity) value is generated for each pixel based on mapping a number of alpha values of 1s and 0s. The collection of these four texture alpha values yields a filtered or sampled texture alpha values for each pixel within the quad. For example, rasterizing the primitive and filtering an original set of texture alpha values of 1s and 0s by mapping a texture to the graphics primitive may yield alpha values A1 406 of .7, A2 407 of .5, A3 408 of .3, and A4 409 of .2. These alpha values A1 406, A2 407, A3 408, and A4 409 can be depicted as an arrow projecting orthogonally upward from the (x, y) coordinate space of the block of 2x2 pixels 400

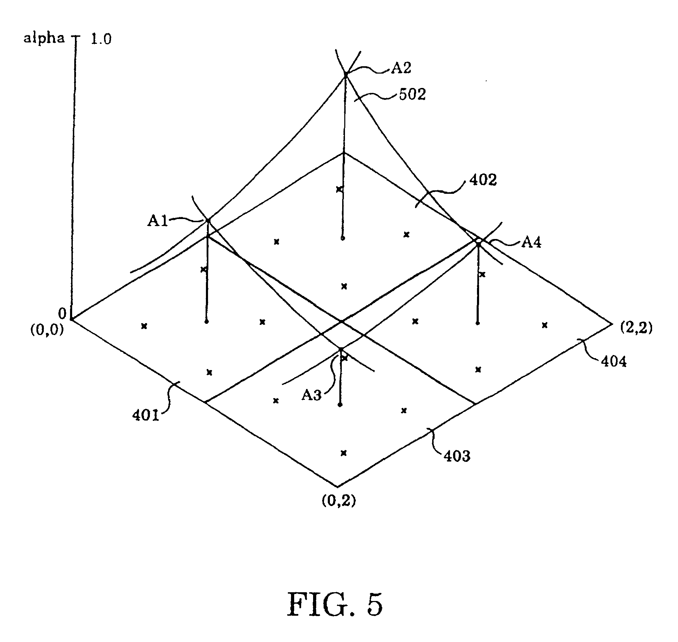

Figure 5 illustrates a three-dimensional view of a surface 502 defined by the orthogonally projecting alpha values A1 406 of .7, A2 407 of .5, A3 408 of .3, and A4 409 of .2 for the pixels 401 through 404 in the quad. The present invention utilizes the alpha values A1 406, A2 407, A3 408, and A4 409 to generate additional subsampled alpha values at each of the exemplary subsample points 410 through 425. Specifically, the alpha values at the subsample points 410 through 425 can be computed by interpolation or extrapolation. The interpolation or extrapolation of the subsample alpha values is possible because the graphics primitive (e.g., polygon) within which the pixels reside is a linear surface. Hence, the alpha value for each of the subsample points can be treated as points on a three-dimensional continuous surface. Thus, given the alpha values A1 406, A2 407, A3 408, and A4 409 at the pixels 401 through 404, the alpha values at any subsample points can be generated through either interpolation or extrapolation technique. In the present invention, interpolation refers to determine a value of a point between points having known values and extrapolation refers to estimating a value of a point by extending or projecting known values of points.

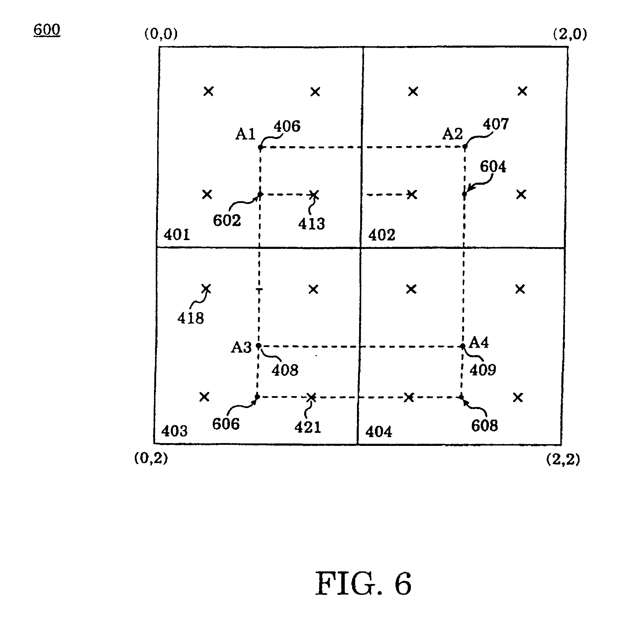

Figure 6 shows a block of 2x2 pixels 600 for illustrating exemplary bi-linear interpolation and extrapolation techniques in accordance with the present invention. The pixels 401 through 404 have associated alpha values and coordinates at the center of the respective pixels. An alpha value at the subsample point 413 is generated through bi-linear interpolation. First, the bi-linear interpolation technique determines the alpha values at two intermediate sample points 602 and 604. The alpha value at the intermediate sample point 602 is linearly interpolated between the points associated with A1 406 and A3 408. Likewise, the alpha value at the intermediate sample point 604 is linearly interpolated between the points associated with A2 407 and A4 409. Then, the alpha value at the subsample point 413 is linearly interpolated between the alpha values and coordinates of the intermediate points 602 and 604.

Similarly, an alpha value at the sample point 421 can be determined by bi-linear extrapolation. First, alpha values at a pair of intermediate sample points 606 and 608 are computed. The alpha value at the intermediate sample point 606 is linearly extrapolated by projecting the alpha values of points A1 406 and A3 408. Likewise, the alpha value at the intermediate sample point 608 is linearly extrapolated by extending the alpha values at points A2 407 and A4 409. The alpha value at the subsample point 421 is then linearly interpolated between the alpha values and coordinates of the intermediate points 606 and 608. The bi-linear interpolation and extrapolation techniques illustrated in Figure 6 are well known in the art. It should be appreciated that the present invention can be implemented by using a block of NxN pixels where N is larger than 2. A block of 3x3 pixels, for example, can use conventional quadratic interpolation technique and a block of 4x4 pixels can employ a traditional cubic interpolation technique. Those skilled in the art will further recognize that alpha values for all other subsample points within a block of NxN pixels can be similarly interpolated or extrapolated from the alpha values of the pixels.

By interpolating supersample alpha values from NxN block of pixels, the present invention provides an advantage of locality. That is, as a pixel is being drawn, its alpha value is processed. Unlike the traditional method of generating a new texture sample which involves accessing the original texture image and bi- or tri-linearly mapping or filtering the texture data, the present invention generates one new supersample (i.e., subsample) point at the cost of one linear combination of NxN elements where N is an integer greater than 1. In addition, unlike conventional methods that interpolated and generated supersampled texels, the present invention interpolates only the alpha values. Hence, the antialiasing method of the present invention requires less data processing and is thus more efficient than the conventional methods.

In a computer system, loading and storing operations between a processor and a memory are typically the critical path in performance. This is because more time is usually required to perform load and store operations than arithmetic and logical operations. The conventional high resolution texture, for example, generates and stores more texels. In contrast, the present invention does not generate additional texels. Instead, it generates alpha values at subsample points as the pixels are drawn. This simultaneous processing of pixels in the present invention thus minimizes the time consuming load and store operations because access to the original texture image data or procedure is kept at a minimum. Therefore, the present invention improves overall performance of the computer system at a lower cost.

The present invention, subsampled texture edge antialiasing, is thus described. While the present invention has been described in particular embodiments, it should be appreciated that the present invention should not be construed as being limited by such embodiments, but rather construed according to the following claims.

## Claims

1. A method of generating an antialiased texture image having a plurality of edges, in a computer system (100), said method comprising the steps of:
a) mapping a texture (302) onto a graphics primitive to generate a plurality of pixels (401-404) including a plurality of texture alpha values (406-409), one texture alpha value per pixel, each texture alpha value representing the opacity at a pixel;
b) selecting a block (304) of NxN pixels (400, 600) within the graphics primitive;
c) generating a set (306) of subsample points (410-425) within each pixel (401-404) of the block of NxN pixels (400, 600);
d) computing (308) an alpha value for each subsample point within the set of subsample points (410-425) based on the NxN pixels (400, 600); and
e) generating an antialiased pixel (310) at each of the pixels (401-404) within the block of NxN pixels (400, 600) based on the computed alpha values for the set of subsample points (410-425).

2. The method as recited in Claim 1 wherein the texture mapping step a) further comprises the steps of:
rasterizing the graphics primitive; and
generating the plurality of texture alpha values (406-409) within the graphics primitive.

3. The method as recited in Claim 1 wherein the antialiased pixel generation step e) further comprises the steps of:
f) determining a coverage mask for each pixel (401-404) in the block of NxN pixels (400, 600); and
g) blending the coverage mask to generate an antialiased pixel value for each pixel (401-404) in the block of NxN pixels (400, 600).

4. The method as recited in Claim 1 wherein said alpha value for each subsample point is interpolated from the coordinate values and texture alpha values (406-409) of the NxN pixels (400, 600).

5. The method as recited in Claim 1 wherein the texture is comprised of a plurality of texels, each texel including an R, G, B, and alpha value representing opacity.

6. The method as recited in Claim 3 further comprising the step of repeating steps a) through g) (314) for other blocks of NxN pixels (400, 600) until all pixels (401-404) within the graphics primitive have been rendered.

7. The method as recited in Claim 1 wherein said alpha value for each subsample point (410-425) is computed from the coordinate values and texture alpha values (406-409) of the NxN pixels (400, 600).

8. The method as recited in Claim 1 or 7 wherein the alpha values for the set of subsamples (410-425) are computed by interpolation.

9. The method as recited in Claim 1 or 7 wherein the alpha values for the set of subsamples (410-425) are computed by extrapolation.

10. The method as recited in Claim 3 wherein the coverage mask is determined by applying an alpha threshold test.

11. The method as recited in Claim 1 wherein the graphics primitive is a polygon.

12. The method as recited in Claim 11 wherein the polygon is a triangle.

13. The method as recited in Claim 1 wherein the plurality of texture alpha values (406-409) are generated from a texture comprised of a plurality of texels, each texel including an R, G, B, and alpha value representing opacity.

14. The method as recited in Claim 6 wherein N is 2.

15. The method as recited in Claim 8 or 14 wherein the alpha values for the plurality of subsamples (410-425) are computed by bi-linear interpolation.

16. The method as recited in Claim 8 or 14 wherein the alpha values for the plurality of subsamples (410-425) are computed by bi-linear extrapolation.

## Patentansprüche

1. Verfahren zum Erzeugen eines antialisierten Texturbilds mit einer Mehrzahl von Rändern in einem Computersystem (100), wobei das genannte Verfahren die folgenden Schritte umfasst:
a) Abbilden einer Textur (302) auf eine Grafik-Grundstruktur, um eine Mehrzahl von Pixeln (401-404) zu erzeugen, die eine Mehrzahl von Textur-Alphawerten (406-409) aufweisen, mit einem Textur-Alphawert pro Pixel, wobei jeder Textur-Alphawert die Opazität an einem Pixel darstellt;
b) Auswählen eines Blocks (304) mit NxN Pixeln (400, 600) in der Grafik-Grundstruktur;
c) Erzeugen einer Gruppe (306) von Unterabtastungspunkten (410-425) in jedem Pixel (401-404) des Blocks mit NxN Pixeln (400, 600);
d) Berechnen (308) eines Alphawerts für jeden Unterabtastungspunkt in der Gruppe von Unterabtastungspunkten (410-425) auf der Basis von NxN Pixeln (400, 600); und
e) Erzeugen eines antialisierten Pixels (310) an jedem der Pixel (401-404) in dem Block mit NxN Pixeln (400, 600) auf der Basis der berechneten Alphawerte für die Gruppe von Unterabtastungspunkten (410-425).

2. Verfahren nach Anspruch 1, wobei der Schritt a) der Texturabbildung ferner die folgenden Schritte umfasst:
Rastern der Grafik-Grundstruktur; und
Erzeugen der Mehrzahl von Textur-Alphawerten (406-409) in der Grafik-Grundstruktur.

3. Verfahren nach Anspruch 1, wobei der Schritt e) der antialiserten Pixelerzeugung ferner die folgenden Schritte umfasst:
f) Bestimmen einer Abdeckmaske für jedes Pixel (401-404) in dem Block mit NxN Pixeln (400, 600); und
g) Mischen der Abdeckmaske zum Erzeugen eines antialisierten Pixelwerts für jedes Pixel (401-404) in dem Block mit NxN Pixeln (400, 600).

4. Verfahren nach Anspruch 1, wobei der genannte Alphawert für jeden Unterabtastungspunkt aus den Koordinatenwerten und Textur-Alphawerten (406-409) der NxN Pixel (400, 600) interpoliert wird.

5. Verfahren nach Anspruch 1, wobei die Textur eine Mehrzahl von Texel umfasst, wobei jedes Texel einen R-, G-, B- und Alphawert aufweist, der die Opazität darstellt.

6. Verfahren nach Anspruch 3, wobei das Verfahren ferner den Schritt des Wiederholens der Schritte a) bis g) (314) für andere Blöcke mit NxN Pixeln (400, 600) umfasst, bis alle Pixel (401-404) in der Grafik-Grundstruktur gerendert worden sind.

7. Verfahren nach Anspruch 1, wobei der genannte Alphawert für jeden Unterabtastungspunkt (410-425) aus den Koordinatenwerten und Textur-Alphawerten (406-409) der NxN Pixel (400, 600) berechnet wird.

8. Verfahren nach Anspruch 1 oder 7, wobei die Alphawerte für die Gruppe der Unterabtastungen (410-425) durch Interpolation berechnet werden.

9. Verfahren nach Anspruch 1 oder 7, wobei die Alphawerte für die Gruppe der Unterabtastungen (410-425) durch Extrapolation berechnet werden.

10. Verfahren nach Anspruch 3, wobei die Abdeckmaske durch Anwenden eines Alpha-Schwellenwerttests bestimmt wird.

11. Verfahren nach Anspruch 1, wobei es sich bei der Grafik-Grundstruktur um ein Polygon handelt.

12. Verfahren nach Anspruch 11, wobei es sich bei dem Polygon um ein Dreieck handelt.

13. Verfahren nach Anspruch 1, wobei die Mehrzahl der Textur-Alphawerte (406-409) aus einer Textur erzeugt wird, die eine Mehrzahl von Texel umfasst, wobei jedes Texel einen R-, G-, Bund Alphawert aufweist, der die Opazität darstellt.

14. Verfahren nach Anspruch 6, wobei N gleich 2 ist.

15. Verfahren nach Anspruch 8 oder 14, wobei die Alphawerte für die Mehrzahl der Unterabtastungen (410-425) durch bilineare Interpolation berechnet werden.

16. Verfahren nach Anspruch 8 oder 14, wobei die Alphawerte für die Mehrzahl der Unterabtastungen (410-425) durch bilineare Extrapolation berechnet werden.

## Revendications

1. Procédé de génération d'une image de texture anti-crénelée ayant une pluralité de contours, dans un système informatique (100), ledit procédé comprenant les étapes de :
a) mappage d'une texture (302) sur un primitive graphique pour générer une pluralité de pixels (401 à 404) comprenant une pluralité de valeurs alpha de texture (406 à 409), une valeur alpha de texture par pixel, chaque valeur alpha de texture représentant l'opacité d'un pixel ;
b) sélection d'un bloc (304) de N x N pixels (400, 600) dans la primitive graphique ;
c) génération d'un ensemble (306) de points de sous-échantillon (410 à 425) dans chaque pixel (401 à 404) du bloc de N x N pixels (400, 600) ;
d) calcul (308) d'une valeur alpha pour chaque point de sous-échantillon dans l'ensemble de points de sous-échantillon (410 à 425) sur la base des N x N pixels (400, 600) ; et
e) génération d'un pixel anti-crénelé (310) à chacun des pixels (401 à 404) dans le bloc de N x N pixels (400, 600) sur la base des valeurs alpha calculées pour l'ensemble de points de sous-échantillon (410 à 425).

2. Procédé selon la revendication 1 dans lequel l'étape de mappage de texture a) comprend en outre les étapes de :
tramage d'une primitive graphique ; et
génération de la pluralité de valeurs alpha de texture (406 à 409) dans la primitive graphique.

3. Procédé selon la revendication 1 dans lequel l'étape de génération de pixel anti-crénelé e) comprend en outre les étapes de :
f) détermination d'un masque de couverture pour chaque pixel (401 à 404) dans le bloc de N x N pixels (400, 600) ; et
g) mélange du masque de couverture pour générer une valeur de pixel anti-crénelé pour chaque pixel (401 à 404) dans le bloc de N x N pixels (400, 600).

4. Procédé selon la revendication 1 dans lequel ladite valeur alpha pour chaque point de sous-échantillon est interpolée à partir des valeurs de coordonnées et des valeurs alpha de texture (406 à 409) de N x N pixels (400, 600).

5. Procédé selon la revendication 1 dans lequel la texture est composée d'une pluralité de texels, chaque texel comprenant une valeur R, G, B, et alpha représentant une opacité.

6. Procédé selon la revendication 3 comprenant en outre l'étape de répétition des étapes a) jusqu'à g) (314) pour d'autres blocs de N x N pixels (400, 600) jusqu'à ce que tous les pixels (401 à 404) dans la primitive graphique aient été rendus.

7. Procédé selon la revendication 1 dans lequel ladite valeur alpha pour chaque point de sous-échantillon (410 à 425) est calculée à partir des valeurs de coordonnées et des valeurs alpha de texture (406 à 409) des N x N pixels (400, 600).

8. Procédés selon la revendication 1 ou 7 dans lequel les valeurs alpha pour l'ensemble de sous-échantillon (410 à 425) sont calculées par interpolation.

9. Procédé selon la revendication 1 ou 7 dans lequel les valeurs alpha pour l'ensemble de sous-échantillon (410 à 425) sont calculées par extrapolation.

10. Procédé selon la revendication 3 dans lequel le masque de couverture est déterminé en appliquant un test de seuil alpha.

11. Procédé selon la revendication 1 dans lequel la primitive graphique est un polygone.

12. Procédé selon la revendication 11 dans lequel le polygone est un triangle.

13. Procédé selon la revendication 1 dans lequel la pluralité de valeurs alpha de texture (406 à 409) est générée à partir d'une texture composée d'une pluralité de texels, chaque texel comprenant une valeur R, G, B, et alpha représentant une opacité.

14. Procédé selon la revendication 6 dans lequel N vaut 2.

15. Procédé selon la revendication 8 ou 14 dans lequel les valeurs alpha pour la pluralité de sous-échantillons (410 à 425) sont calculées par une interpolation bi-linéaire.

16. Procédé selon la revendication 8 ou 14 dans lequel les valeurs alpha pour la pluralité de sous-échantillons (410 à 425) sont calculées par une extrapolation bi-linéaire.
